# EUROPÄISCHE PATENTSCHRIFT

(11) **EP 1 491 771 B1**
(45) Veröffentlichungstag und Bekanntmachung des Hinweises auf die Patenterteilung: **01.03.2006**
(21) Anmeldenummer: 04103012.3
(22) Anmeldetag: 28.06.2004
(51) Int. Cl.: F15B 15/28, G01D 5/165, G01D 5/06

(54) **Einrichtung zur Ermittlung der aktuellen Stellung eines Antriebsgliedes**
Device for determining the actual position of an actuator
Dispositif pour déterminer la position effective d'un actionneur

(30) Priorität: 27.06.2003 DE 10329044; 27.06.2003 DE 10329045
(43) Veröffentlichungstag der Anmeldung: 29.12.2004
(73) Patentinhaber: Rexroth Mecman GmbH, 30880 Laatzen (DE)
(72) Erfinder: JACOBS, Frank, 30171, Hannover (DE); BRANDES, Wolfgang, 30419, Hannover (DE); MEYER, Ernst-August, 30974, Wennigsen (DE); FORTMANN, Norbert, 30163, Hannover (DE); LIESENHOFF, Thomas, 30159, Hannover (DE)
(74) Vertreter: Kietzmann, Lutz

(56) Entgegenhaltungen:
- DE-A- 3 803 268
- DE-A- 4 335 004
- US-A- 3 736 396
- US-A- 5 442 865

## Beschreibung

Die vorliegende Erfindung betrifft eine Einrichtung zur Ermittlung der aktuellen Stellung eines Antriebsgliedes entlang des Hubwegs oder Drehwinkels, insbesondere bei einem druckmittelbetriebenen Linear- bzw. Drehantrieb, das innerhalb eines Antriebsgehäuses durch Druckmittelbeaufschlagung bewegbar untergebracht ist, wobei das Antriebsglied einen Permanentmagneten zum magnetischen Zusammenwirken mit außerhalb oder am LK:

Antriebsgehäuse angeordneten Mitteln zur Detektion der aktuellen Stellung des Antriebsgliedes aufweist.

Das Einsatzgebiet der Erfindung erstreckt sich auf den Bereich der Automatisierungstechnik. Beispielsweise bei Pneumatikzylindern, als automatisierungstechnische Komponenten wird die aktuelle Stellung des Kolbens als Antriebsglied detektiert, um einer übergeordneten elektronischen Steuereinheit die Information darüber zu vermitteln, in welcher Ausfahrstellung sich die Kolbenstange des Pneumatikzylinders in Ergebnis einer Druckmittelbeaufschlagung befindet. Mit dieser steuerungstechnischen Information wird der Pneumatikzylinder innerhalb eines Automatisierungssystems koordiniert betrieben.

Aus der DE 38 03 268 A1 geht eine gattungsgemäße Einrichtung hervor. Diese besteht im wesentlichen aus einem pneumatischen oder hydraulischen Arbeitszylinder, dessen Zylinderrohr aus einem unmagnetischen Material hergestellt ist und dessen Kolben als Arbeitsglied einen in Achsrichtung der Kolbenstange polarisierten Permanentmagneten aufweist. An der Außenwand des Zylinderrohres ist im Bereich des Druckraums ein weiterer Permanentmagnet vorgesehen, der in einem Gehäuse untergebracht ist, in dem ein Läufer bewegbar ist. Der Läufer weist einen Permanentmagneten auf, der mit dem Permanentmagneten des Kolbens magnetisch gekoppelt ist. Aufgrund dieser magnetischen Kopplung wird die Bewegung des Kolbens synchron auf den Läufer übertragen, der die jeweilige Stellung des Kolbens mit Hilfe eines Zeigers an einem Messstab anzeigt. An der Stellung des Zeigers ist optisch die aktuelle Stellung des Antriebsgliedes innerhalb des Zylinderrohres als geschlossenes Antriebsgehäuses ablesbar. Gemäß einer weiteren Ausführungsform wird hier vorgeschlagen, den Zeiger mit einem Schleifer eines linearverstellbaren herkömmlichen Potentiometers zu koppeln, um ein die aktuelle Stellung des Kolbens repräsentierendes elektrisches Signal zu gewinnen, welches mit einer elektronischen Steuereinheit entsprechend auswertbar und weiterverarbeitbar ist.

Ein Nachteil dieser Lösung besteht jedoch darin, dass eine solche Kombination eines magnetischen Läufers mit einem herkömmlichen Linear-Potentiometer einen recht großen Bauraum erfordert. Weiterhin kann es im Verbindungsbereich zwischen dem magnetischen Läufer und dem Schleifer des Linear-Potentiometers zu mechanischen Verklemmungen und damit zum Ausfall dieses mechanischen Wegmesssystems kommen.

Es ist daher die Aufgabe der vorliegenden Erfindung eine Einrichtung zur Ermittlung der aktuellen Stellung eines Antriebsgliedes entlang des Hubweges oder Drehwinkels zu schaffen, die mit einfachen technischen Mitteln bauraumsparend eine zuverlässige Wegmessung gewährleistet.

Die Aufgabe wird ausgehend von einer Einrichtung gemäß dem Oberbegriff des Anspruchs 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass die Mittel zur Detektion der aktuellen Stellung des Antriebgliedes ein im magnetischen Wirkbereich des Permanentmagneten des Antriebsgliedes und entlang dessen Hubwegs bzw. Drehwinkels angeordnetes Potentiometerfolienelement umfassen, dessen Kontaktelektrode achsparallel zum Antriebsglied verläuft und über die magnetische Kraft des Permanentmagneten örtlich konzentriert betätigbar ist.

Der Vorteil der erfindungsgemäßen Lösung liegt insbesondere darin, dass mit dem flachbauenden Potentiometerfolienelement eine besonders bauraumsparende Lösung zur Wegmessung darstellbar ist. Das Potentiometerfolienelement kann direkt durch den im Antriebsglied integrierten Permanentmagneten örtlich konzentriert betätigt werden. Damit entfallen gleitreibungsbehaftete zwischengeschaltete Bauelemente im Betätigungskraftfluss, so dass ein Verklemmen von Komponenten der Wegmesseinrichtung nicht zu befürchten ist.

Ein Potentiometerfolienelement, was sich zum Einsatz bei der vorliegenden Erfindung eignet, geht an sich beispielsweise aus der DE 43 35 004 C2 hervor. Das Potentiometerfolienelement besteht aus einem unteren Träger, auf dem eine Widerstandsstrecke aufgebracht ist. Ein oberer Träger ist vorgesehen, auf dem eine dem Bahnverlauf der Widerstandsstrecke folgende Kontaktelektrode aufgebracht ist, die der Widerstandsstrecke getrennt durch einen Isolierrahmen im elektrischen Isolierabstand gegenüberliegt und durch Andrücken des oberen Trägers mit der Widerstandsstrecke in elektrische Verbindung bringbar ist. Entsprechende elektrische Anschlusspole an den Enden der Widerstandsstrecke sowie an der Kontaktelektrode sind vorgesehen, so dass anhand der durch Andrücken des oberen Trägers sich ändernde elektrische Widerstand als Ort des Andrückpunktes über eine entsprechende Auswertelektronik erfassbar ist.

Erfindungsgemäß erfolgt die Betätigung, d. h. dass das Andrücken der Kontaktelektrode an die Widerstandsbahn, magnetisch, nämlich durch den im Antriebsglied eingelassenen Permanentmagneten.

Zur Verstärkung der die Kontaktelektrode des Potentiometerfolienelements betätigenden magnetischen Kraft ist vorteilhafter Weise an der dem Permanentmagneten des Antriebsgliedes gegenüberliegenden Seite des Potentiometerfolienelements mindestens ein Verstärkungselement in Form eines ferromagnetischen Körpers angeordnet. Alternativ zum ferromagnetischen Körper kann hier auch ein anziehend polarisiert ausgerichteter weiterer Permanentmagnet als Verstärkungselement vorgesehen werden.

Im einfachsten Falle ist das mindestens eine Verstärkungselement als eine auf die Betätigungsoberfläche (oberer Träger) das Folienpotentiometerelements aufgebrachte ferrohaltige Kunststofffolie ausgebildet. Die Kunststofffolie folgt partiell der Anziehungskraft des im Antriebsglied eingebrachten Permanentmagneten beim Durchfahren des Hubwegs.

Anstelle einer ferrohaltigen Kunststofffolie kann auch ein in geeigneter Weise in ein Behältnis eingeschlossenes Fluid verwendet.

Die vorstehend allgemein beschriebene Einrichtung zur Ermittlung der aktuellen Stellung eines Antriebsgliedes entlang eines Hubwegs oder eines Drehwinkels eignet sich - wie bereits vorstehend ausgeführt - insbesondere zum Einsatz bei einem Pneumatikzylinder als Linearantrieb, dessen Kolben das Antriebsglied repräsentiert. Daneben ist es auch möglich, die vorliegende Erfindung bei einem pneumatischen Drehantrieb zum Einsatz zu bringen, wobei der Drehflügel des Drehantriebs als Antriebsglied fungiert.

Es ist auch denkbar, dass die Mittel zu Detektion der aktuellen Stellung eines Antriebsgliedes lediglich in mindestens einer Endlagenposition desselben angeordnet sind, um eine Art Endlagenschalter zu bilden.

Gemäß einer weiteren, die Erfindung verbessernde Maßnahme ist vorgesehen, dass das Potentiometerfolienelement, ggf. mit Verstärkungselement, innerhalb eines in die Wandung des Antriebsgehäuses eingebrachten, geschlossenen Kanals untergebracht ist. Störende Umwelteinflüsse, insbesondere mechanische Beschädigungen des empfindlichen Potentiometerfolienelements, können somit wirkungsvoll verhindert werden, ohne das die Funktion des Potentiometerfolienelements beeinträchtigt wird.

Weitere die Erfindung verbessernde Maßnahmen werden nachstehend gemeinsam mit der Beschreibung bevorzugter Ausführungsbeispiele der Erfindung anhand der Figuren näher dargestellt. Es zeigt:
- Figur 1: eine perspektivische, schematische Darstellung eines Pneumatikzylinders als Linearantrieb, welcher mit einer Einrichtung zur Ermittlung der aktuellen Stellung des innenliegenden Kolbens ausgestattet ist, und
- Figur 2: eine perspektivische schematische Darstellung eines weiteren Pneumatikzylinders als Linearantrieb, welcher mit einer Einrichtung zur Ermittlung beider Endlagenpositionen eines integrierten Antriebsgliedes ausgestattet ist.

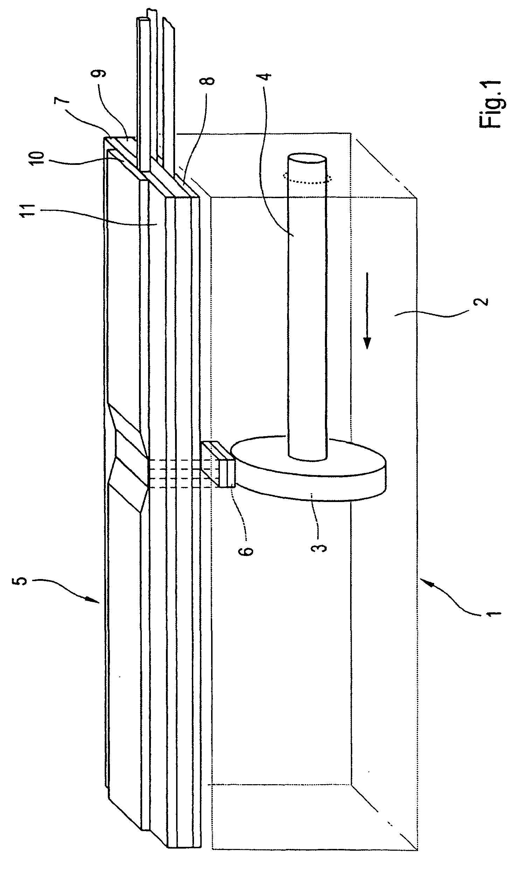

Gemäß Figur 1 besteht der hier als Pneumatikzylinder 1 ausgebildete Linearantrieb im Wesentlichen aus einem Antriebsgehäuse 2, in welchem ein Antriebsglied 3 in Form eines Kolbens längs bewegbar untergebracht ist. Vom Antriebsglied 3 aus verläuft eine Antriebsstange 4, hier eine Kolbenstange, welche das Antriebsgehäuse 2 zu einer Seite hin abgedichtet durchdringt, um die mit dem Pneumatikzylinder 1 erzeugte mechanische Kraft nach außen hin weiterzugeben. Die Krafterzeugung erfolgt in herkömmlicher Weise über - nicht weiter dargestellte - äußere Druckmittelanschlüsse, mit welchen das innenliegende Antriebsglied 3 wechselseitig beaufschlagbar ist, um ein Ein- oder Ausfahren der Antriebsstange 4 zu bewirken. Die Länge des Pneumatikzylinders 1 definiert den maximal möglichen Hub der Antriebsstange 4.

Des weiteren sind die Mittel zur Detektion der aktuellen Stellung des Antriebsgliedes 3 vorgesehen, welche über den gesamten Hubbereich des Pneumatikzylinders 1 verlaufen und im Wesentlichen aus einem Potentiometerfolienelement 5 bestehen. Das Potentiometerfolienelement 5 wird von einem im Antriebsglied 3 integrierten Permanentmagneten 6 magnetisch betätigt, indem eine Kontaktelektrode 7 des Potentiometerfolienelements 6 achsparallel zur Bewegungsrichtung des Antriebsglieds 3 verläuft und auf eine unterhalb angeordnete Widerstandsbahn 8 niedergedrückt wird, sobald das nach radial außen gerichtete magnetische Feld des Permanentmagneten 6 eine entsprechend örtlich konzentrierte Zugkraft aufbringt. Wenn sich der Permanentmagnet 6 nicht im Wirkungsbereich des Potentiometerfolienelements 5 befindet, dann bleibt die Kontaktelektrode 7 von der Widerstandsbahn 8 beabstandet. Hierfür dient ein zwischengeordneter Isolierrahmen 9.

Für weitere Einzelheiten hinsichtlich des Potentiometerfolienelements 5 wird an dieser Stelle voll inhaltlich auf die DE 43 35 004 C2 verwiesen, welche Aufbau und Funktion eines Potentiometerfolienelements der Gattung nach näher beschreibt.

Zur Verstärkung der magnetischen Kraft, welche die Kontaktelektrode 7 des Potentiometerfolienelements 5 betätigt, ist an der dem Permanentmagneten 6 des Antriebsgliedes 3 gegenüberliegenden Seite des Potentiometerfolienelements 5 ein Verstärkungselement 10 vorgesehen. Das Verstärkungselement 10 ist hier als eine auf einer oberen Betätigungsoberfläche 11 aufgebrachte ferrohaltige Kunststofffolie ausgebildet.

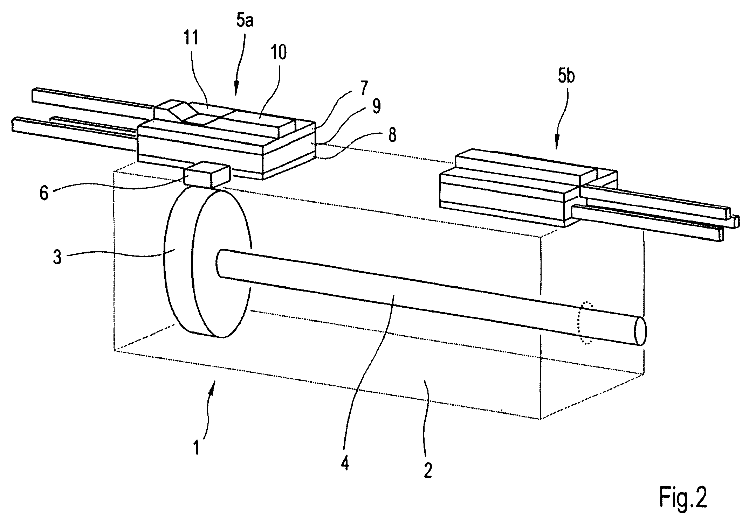

In der Figur 2 sind spezielle Mittel zur Detektion der beiden Endlagenpositionen vorgesehen, welche nur im Bereich beider Endlagen angeordnet sind und im Wesentlichen aus je einem Potentiometerfolienelement 5a, 5b bestehen. Die Potentiometerfolienelemente 5a und 5b werden auch hier von einem im Antriebsglied 3 integrierten Permanentmagneten 6 magnetisch betätigt. Ansonsten gleicht diese Ausführungsform der vorstehend beschriebenen Ausfühmngsform.

Die Erfindung ist nicht beschränkt auf die vorstehend beschriebenen bevorzugten Ausführungsformen. Es sind vielmehr auch eine Reihe von Varianten hiervon denkbar, die vom Schutzbereich der Ansprüche umfasst sind. So ist die Anwendung der erfindungsgemäßen Einrichtung nicht allein beschränkt auf Pneumatikzylinder. Es können hiermit vielmehr auch andere als Linear- oder Drehantriebe ausgebildete Aktoren ausgestattet werden.

### Bezugszeichenliste

- 1: Pneumatikzylinder
- 2: Antriebsgehäuse
- 3: Antriebsglied
- 4: Antriebsstange
- 5: Potentiometerfolienelement
- 6: Permanentmagnet
- 7: Kontaktelektrode
- 8: Widerstandsbahn
- 9: Isolierrahmen
- 10: Verstärkungselement
- 11: Betätigungsoberfläche

## Patentansprüche

1. Einrichtung zur Ermittlung der aktuellen Stellung eines Antriebsgliedes (3) entlang des Hubwegs oder Drehwinkels, insbesondere bei einem druckmittelbetriebenen Linear- bzw. Drehantrieb, das innerhalb eines Antriebsgehäuses (2) durch Druckmittelbeaufschlagung bewegbar untergebracht ist, wobei das Antriebsglied (3) einen Permanentmagneten (6) zum magnetischen Zusammenwirken mit außerhalb oder am Antriebsgehäuse (2) angeordneten Mitteln zur Detektion der aktuellen Stellung eines Antriebsgliedes (3) aufweist,
**dadurch gekennzeichnet, dass** die Mittel zur Detektion der aktuellen Stellung ein im magnetischen Wirkbereich des Permanentmagneten (6) und entlang des Hubwegs bzw. Drehwinkels angeordnetes Potentiometerfolienelement (5) umfassen, dessen Kontaktelektrode (7) achsparallel zum Antriebsglied (3) verläuft und über die magnetische Kraft des Permanentmagneten (6) örtlich konzentriert betätigbar ist, wobei an der dem Permanentmagneten (6) des Antriebsgliedes (3) gegenüberliegenden Seite des Potentiometerfolienelements (5) mindestens ein Verstärkungselement (10) in Form eines auf der Betätigungsoberfläche (11) des Potentiometerfolienelements (5) aufgebrachte ferrohaltige Kunststofffolie angeordnet ist.

2. Einrichtung nach Anspruch 1,
**dadurch gekennzeichnet, dass** die Mittel zu Detektion der aktuellen Stellung eines Antriebsgliedes (3) lediglich in mindestens einer Endlagenposition desselben angeordnet sind, um eine Art Endlagenschalter zu bilden.

3. Einrichtung nach Anspruch 1 oder 2,
**dadurch gekennzeichnet, dass** das Antriebsglied (3) ein Kolben eines Pneumatikzylinders (1) als Linearantrieb ist.

4. Einrichtung nach Anspruch 1 oder 2,
**dadurch gekennzeichnet, dass** das Antriebsglied (3) ein Drehflügel eines pneumatischen Drehantriebs ist.

5. Einrichtung nach Anspruch 2,
**dadurch gekennzeichnet, dass** der Linearantrieb bzw. der Drehantrieb genau zwei Endlagenpositionen aufweist, denen jeweils ein einziges Potentiometerfolienelement (5a, 5b) zugeordnet ist.

6. Einrichtung nach einem der vorstehenden Ansprüche,
**dadurch gekennzeichnet, dass** das Potentiometerfolienelement (5; 5a, 5b) innerhalb eines in die Wandung des Antriebsgehäuses (2) eingebrachten geschlossenen Kanals untergebracht ist.

## Claims

1. An apparatus for determining the current position of a drive member (3) along its travel path or rotary angle, in particular in a linear or rotary drive operated with a pressurized-medium and which is accommodated within a drive housing (2) and moveable by means of the application of a pressurized medium, wherein the drive member (3) includes a permanent magnet (6) for magnetic interaction with means arranged on the outside of or on the drive housing (2) for detecting the current position of a drive member (3),
**characterised in that** the means for detecting the current position comprise a potentiometer foil element (5) arranged within the range of magnetic effect of the permanent magnet (6) and along the travel path or the rotary angle and having a contact electrode (7) extending in parallel to the axis of the drive member (3) and able to be operated in a locally concentrated way by means of the magnetic force of the permanent magnet (6), wherein on the side of the potentiometer foil element (5) opposite the permanent magnet (6) of the drive member (3) at least one amplification element (10) in the form of a plastic film containing a ferromagnetic material is arranged on the operating surface (11) of the potentiometer foil element (5).

2. The apparatus according to claim 1,
**characterised in that** said means for detecting the current position of a drive member (3) are only positioned in at least one end-of-travel position thereof to act as an end-of-travel switch.

3. The apparatus according to claim 1 or 2,
**characterised in that** said drive member (3) is a piston of a pneumatic cylinder (1) as a linear drive.

4. The apparatus according to claim 1 or 2,
**characterised in that** said drive member (3) is a rotary wing of a pneumatic rotary drive.

5. The apparatus according to claim 2,
**characterised in that** said linear drive or said rotary drive has exactly two end-of-travel positions, each having a single potentiometer foil element (5a, 5b) associated with it.

6. The apparatus according to any one of the preceding claims,
**characterised in that** said potentiometer foil element (5; 5a, 5b) is accommodated within an enclosed channel incorporated in the wall of the drive housing (2).

## Revendications

1. Dispositif pour déterminer la position actuelle d'un organe d'entraînement (3) le long de la course ou de l'angle de rotation, en particulier dans un entraînement linéaire ou rotatif fonctionnant avec fluide sous pression, lequel est logé mobile par sollicitation de fluide sous pression à l'intérieur d'un boîtier d'entraînement (3), l'organe d'entraînement (3) présentant un aimant permanent (6) pour la coopération magnétique avec des moyens agencés à l'extérieur du boîtier d'entraînement (2) ou sur celui-ci pour détecter la position actuelle d'un organe d'entraînement (3),
**caractérisé en ce que** les moyens de détection de la position actuelle comprennent un élément de potentiomètre à film (5) agencé dans le champ d'action magnétique de l'aimant permanent (6) et le long de la course ou de l'angle de rotation, dont l'électrode de contact (7) s'étend parallèlement à l'axe de l'organe d'entraînement (3) et peut être actionnée de manière localement concentrée via la force magnétique de l'aimant permanent (6), et au moins un élément de renforcement (10) sous forme d'une film de matière plastique contenant du fer appliquée sur la surface d'actionnement (11) de l'élément de potentiomètre à film (5) est agencé sur le côté de l'élément de potentiomètre à film (5) qui est opposé à l'aimant permanent (6) de l'organe d'entraînement (3).

2. Dispositif selon la revendication 1,
**caractérisé en ce que** les moyens de détection de la position actuelle d'un organe d'entraînement (3) sont agencés seulement dans au moins une position de fin de course de celui-ci pour former une sorte commutateur de fin de course.

3. Dispositif selon la revendication 1 ou 2,
**caractérisé en ce que** l'organe d'entraînement (3) est un piston d'un cylindre pneumatique (1) servant d'entraînement linéaire.

4. Dispositif selon la revendication 1 ou 2, **caractérisé en ce que** l'organe d'entraînement (3) est un rotor d'un entraînement rotatif pneumatique.

5. Dispositif selon la revendication 2,
**caractérisé en ce que** l'entraînement linéaire ou l'entraînement rotatif présente exactement deux positions de fin de course auxquelles est associé un seul élément de potentiomètre à film (5) respectif.

6. Dispositif selon l'une des revendications précédentes,
**caractérisé en ce que** l'élément de potentiomètre à film (5 ; 5a, 5b) est logé à l'intérieur d'un canal fermé ménagé dans la paroi du boîtier d'entraînement (2).
